# EUROPÄISCHE PATENTSCHRIFT

(11) **EP 1 715 182 B1**
(45) Veröffentlichungstag und Bekanntmachung des Hinweises auf die Patenterteilung: **12.03.2008**
(21) Anmeldenummer: 06007782.3
(22) Anmeldetag: 13.04.2006
(51) Int. Cl.: F03D 11/00, F03D 1/00

(54) **Vorrichtung zur Lagerung und Ausrichtung eines Generators in einer Windenergieanlage**
Device for bearing and alignment of a wind turbine generator
Dispositif pour supporter et aligner un générateur d'une éolienne

(30) Priorität: 22.04.2005 DE 102005018749
(43) Veröffentlichungstag der Anmeldung: 25.10.2006
(73) Patentinhaber: NORDEX ENERGY GmbH, 22848 Norderstedt (DE)
(72) Erfinder: Voss, Eberhard, Dr., 18233 Jörnstorf (DE); Nitzpon, Joachim, 20255 Hamburg (DE); Kroh, Uwe, Dipl.-Ing., 18059 Rostock (DE)
(74) Vertreter: Hauck Patent- und Rechtsanwälte

(56) Entgegenhaltungen:
- DE-A1-4102004 051 05
- US-A- 4 088 352
- US-A1- 2003 071 469
- PATENT ABSTRACTS OF JAPAN Bd. 2003, Nr. 10, 8. Oktober 2003 (2003-10-08) & JP 2003 176774 A (KYOWA ENGINEERING CONSULTANTS CO LTD; ABE SABURO), 27. Juni 2003 (2003-06-27)

## Beschreibung

Die vorliegende Erfindung betrifft eine Vorrichtung zur Lagerung und Ausrichtung eines Generators in einer Windenergieanlage. Der Generator, der die aus dem Wind aufgenommene mechanische Leistung in elektrische Leistung umsetzt, ist als separates Bauteil in der Gondel der Windenergieanlage montiert. Üblicherweise besitzt ein Generator vier einzelne Generatorfüße, die mit einem Generatorträger in der Windenergieanlage verbunden sind. Um auftretende Schwingungen und Vibrationen des Generators nicht über den Generatorträger auf die gesamte Gondel und die Windenergieanlage zu übertragen, ist der Generator üblicherweise auf Dämpfungselementen gelagert. Solche Lagerungen sind beispielsweise aus der US 2003/0071469 oder aus der JP 2 003176774 bekannt.

Neben der ersten Montage tritt auch im Laufe von Reparatur- und Wartungsarbeiten immer wieder die Situation auf, daß der Generator relativ zu dem Triebstrang ausgerichtet werden muß. Hierzu werden die Befestigungen der Dämpfungselemente mit dem Träger der Gondel in der Windenergieanlage gelöst, über Stellschrauben wird der Generator dann neu ausgerichtet und schließlich werden die Dämpfungselemente neu fixiert.

Aufgrund des großen Gewichtes des Generators kann es bei dem Ausrichten zur Verspannung oder sogar zur Beschädigung eines Dämpfungselements kommen, da dieses beim Ausrichten der Generatorfüße ungleichmäßig belastet wird. Auch können die Dämpfungselemente zwischen Generatorfuß und Generatorträger verkanten.

Das Austauschen des beschädigten Dämpfungselementes bei einem bereits montierten Generator ist ein überaus aufwendiges Unterfangen, da hierzu der Generator vollständig von seinem Träger gelöst und mindestens einseitig angehoben werden muß.

Der Erfindung liegt die Aufgabe zugrunde, eine Vorrichtung zur Lagerung und Ausrichtung eines Generators in einer Windenergieanlage bereitzustellen, die mit einfachen Mitteln ein für die Dämpfungselemente schonendes Ausrichten des Generators in der Gondel zuläßt.

Erfindungsgemäß wird die Aufgabe durch eine Vorrichtung mit den Merkmalen aus Anspruch 1 gelöst. Vorteilhafte Ausgestaltungen bilden die Gegenstände der Unteransprüche.

Die erfindungsgemäße Vorrichtung dient zur Ausrichtung und zur Lagerung eines Generators auf einen Generatorträger in einer Windenergieanlage. Die Vorrichtung besitzt eine Platte, die mit Dämpfungselementen für Generatorfüße und mit Bohrungen versehen ist, zur Aufnahme von Verbindungsmitteln, um die Platte mit einem Träger in der Windenergieanlage zu verbinden. Der Generator besitzt üblicherweise vier Generatorfüße, die beispielsweise als Aussparungen im Generatorgehäuse ausgebildet sind. An der Platte sind jedem der Generatorfüße jeweils zwei Stelleinrichtungen zugeordnet, die auf der von dem Generator abgewandten Seite der Platte angeordnet sind. Die Platte ist ferner mit Stellmitteln zur Ausrichtung der Platte auf dem Träger der Windenergieanlage versehen. Ein besonderer Vorteil der erfindungsgemäßen Vorrichtung besteht darin, daß die Dämpfungselemente, die gegen Querkräfte empfindlich sind, auf der Platte fest montiert sind und die Ausrichtung des Generators lediglich die Ausrichtung der Platte relativ zu dem Träger und damit zu dem Antriebsstrang erfolgt. Generator, Dämpfungselement und Platte bilden beim Ausrichten eine Einheit, sodaß eine Fehlbelastung der Dämpfungselemente beim Ausrichten vermieden wird.

In einer bevorzugten Ausgestaltung besitzt jedes Dämpfungselement eine Bohrung zur Aufnahme eines ersten Verbindungsmittels, das im montierten Zustand in den Generatorfuß vorsteht. Die Befestigung des Generators auf dem Dämpfungselement erfolgt über das erste Verbindungsmittel, das aus dem Dämpfungselement in einen der Generatorfüße vorsteht. Hierbei ist es möglich, ein Gummielement in dem Dämpfungselement vorzuspannen.

Als erstes Verbindungselement ist eine Bolzen-Mutter-Kombination vorgesehen, die zweckmäßigerweise im montierten Zustand des Generators bei gelöster Mutter aus der Bohrung in dem Dämpfungselement entfernt werden kann, ohne die Position des Generators zu verändern. Bevorzugt handelt es sich bei der Bohrung in dem Dämpfungselement um eine Gewindebohrung, in die der Bolzen eingeschraubt ist.

Das Dämpfungselement ist über ein zweites Verbindungsmittel mit der Platte verbunden, wobei das Dämpfungselement bevorzugt vormontiert ist.

Die Einstelleinrichtungen an der Platte sind an benachbarten Generatorfüßen jeweils paarweise in einander entgegengesetzter Richtung angeordnet.

Eine bevorzugte Ausgestaltung der erfindungsgemäßen Vorrichtung wird nachfolgend anhand der Figuren näher erläutert:
- Figur 1: zeigt eine perspektivische Ansicht eines Generatorträgers mit einem darauf montierten Generator,
- Figur 2: zeigt den Generatorträger mit dem Generator aus Figur 1 in einer Ansicht von der Seite,
- Figur 3: zeigt eine Detaillansicht III aus Figur 2,
- Figur 4: zeigt eine Detaillansicht IV aus Figur 2,
- Figur 5: zeigt die Platte in der Ansicht von der Seite mit aufgesetztem Dämpfungselement und Schraube,
- Figur 6: zeigt die Platte in einer perspektivischen Ansicht von oben,
- Figur 7: zeigt die Platte in einer Draufsicht und
- Figur 8: zeigt eine Detailansicht eines Trägersockels.

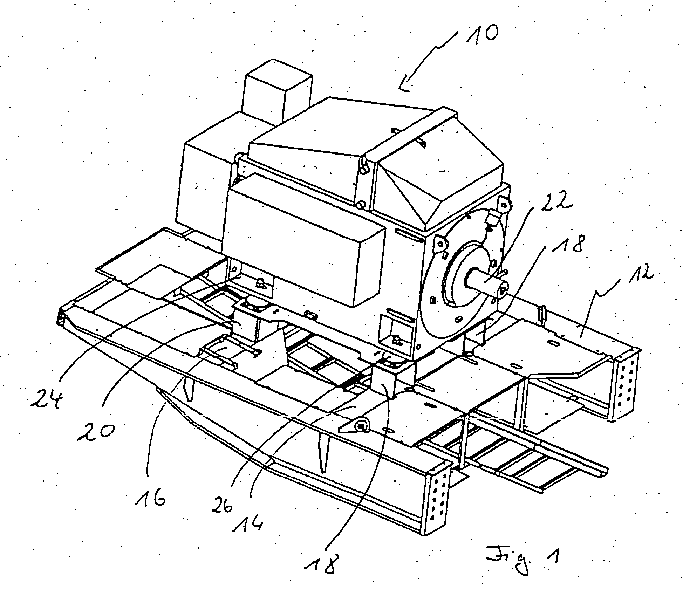

Figur 1 zeigt in einer perspektivischen Ansicht einen Generator 10, der von einem Generatorträger 12 in einer Gondel gehalten wird. Der Generatorträger 12 besitzt zwei in Längsrichtung parallel zueinander verlaufende Profile, die über mindestens zwei Querstreben 14, 16 miteinander verbunden sind. Auf den Querstreben 14, 16 sind jeweils zwei Befestigungssockel 18, 20 vorgesehen.

Der Generator 10 besitzt eine Eingangswelle 22, die zur Abtriebswelle des Getriebes ausgerichtet wird. Parallelität und Winkelversatz müssen den Anforderungen der Kupplung zwischen Getriebe und Generator entsprechen.

Der Generator 10 besitzt in dem dargestellten Beispiel Generatorfüße, die jeweils als eine quaderförmige Ausnehmung 24 in dem Generatorkörper ausgebildet sind. Ebenfalls in Figur 1 zu erkennen ist, daß jeder Generatorfuß sich auf einem Dämpfungselement 26 abstützen. Bei den Dämpfungselementen handelt es sich um Maschinelemente zur Lagerung und Schwingungsdämpfung des Generators. Die Dämpfungselemente besitzen bevorzugt Elastomerlager.

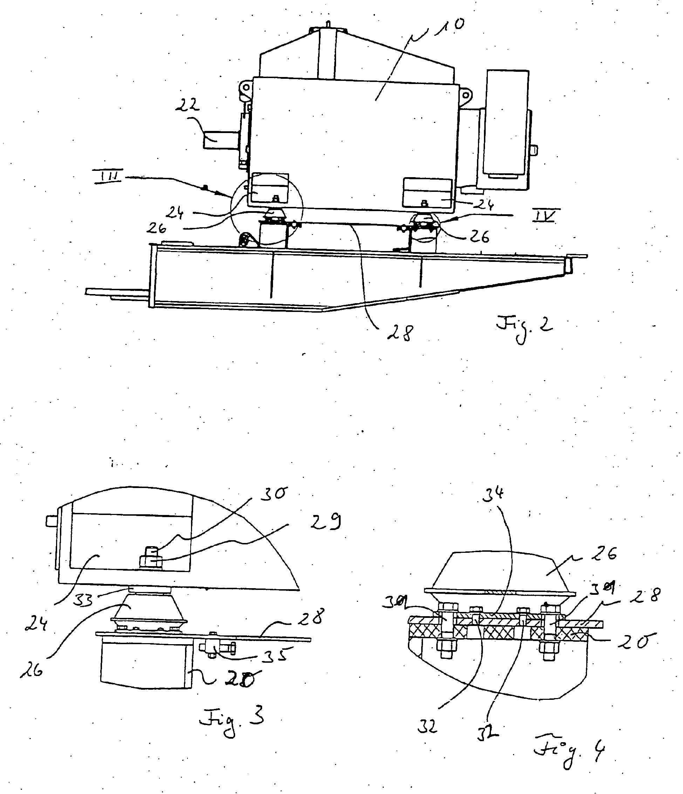

Figur 2 zeigt eine Ansicht des montierten Generators von der Seite. Deutlich zu erkennen ist, daß der Generator 10 frei liegt und lediglich durch die Dämpfungselemente 26 abgestützt ist. Ebenfalls in Figur 2 zu erkennen ist eine Platte 28, die zwischen dem Dämpfungselement 26 und Trägersockel 18, 20 angeordnet ist. Der nähere Aufbau der Abstützung der Generatorfüße wird aus Figur 3 deutlich. Figur 3 zeigt den Generatorfuß 24 mit dem Dämpfungselement 26, das auf der Platte 28 angeordnet ist. Das Dämpfungselement 26 ist mit dem Generatorfuß 24 über eine erste Schraube 30 mit Mutter 29 verbunden. Die Schraube 30 ist in dem Dämpfungselement 26 gelagert, wobei die Mutter an dem Generatorfuß anliegt. Die Schraube 30 ist derart in dem Dämpfungselement 26 gelagert, daß nach Lösen der Mutter 29 die Schraube 30 aus einer Gewindebohrung in dem Dämpfungselement herausgeschraubt werden kann. Die jeweils einseitig geöffneten Trägersockel 18, 20, die Bohrungen 50 in der Platte 28 und entsprechende kreisrunde Bohrungen im Trägersockel 18, 20 in Richtung Generator ermöglichen die Zugänglichkeit zur ersten Schraube 30. Eine Höhenverstellung des Generatorfußes erfolgt über eine Stellmutter 33.

Figur 4 zeigt die Befestigung eines Dämpfungselements 26 auf der Platte 28. Über eine zweite Schraube 31 mit Mutter ist eine Fußplatte 34 des Dämpfungselementes 26 mit der Platte 28 und dem Befestigungssockel 20 verbunden. Diese Schraubverbindung mit Schraube 31 nimmt die Reaktionskräfte des Generators im Betrieb auf und leitet diese in den Generatorträger ab. Zur Ausrichtung der Platte auf dem Befestigungssockel sind die Bohrungen 52 in der Platte 28 als Langlöcher ausgebildet. Über eine dritte Schraube 32 ist die Fußplatte 34 mit der Platte 28 verbunden. Die dritte Schraube 32 erlaubt eine Vormontage der Dämpfungselemente 26 an der Platte 34, die mit einer entsprechenden Gewindebohrung 54 versehen ist.

Nach Lösen der Schrauben 30, 31 und 32 kann das Dämpfungselement 26 seitlich unter dem Generatorfuß 24 herausgezogen werden. Dies erlaubt einen besonders einfachen Austausch des Dämpfungselementes 26, ohne daß der ganze Generator stark angehoben werden muß.

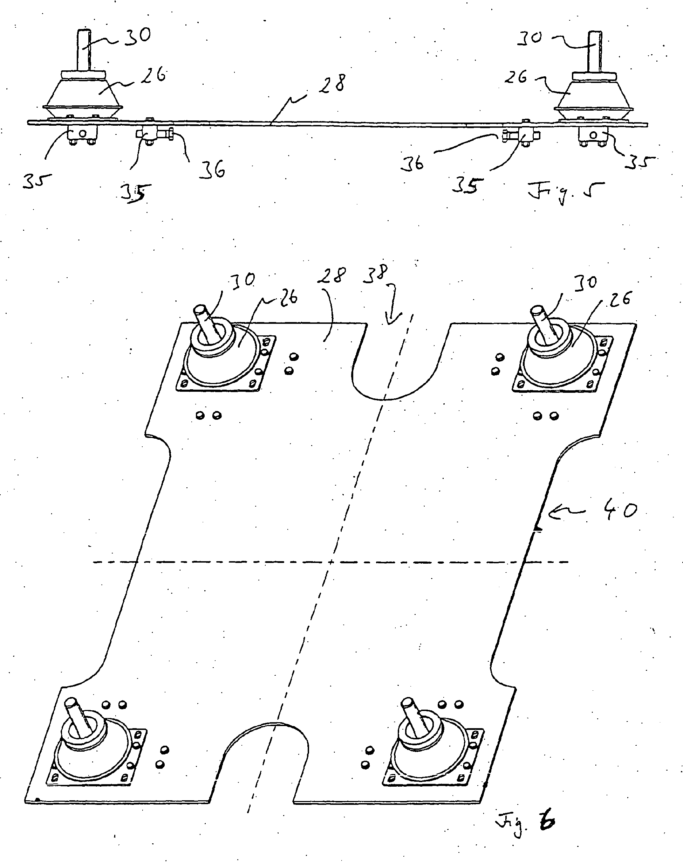

Aus Figuren 5 und 6 ist der Aufbau der Platte 28 in einer seitlichen Ansicht und einer Draufsicht zu erkennen. Auf der von dem Dämpfungselement abgewandten Seite der Platte 28 sind Einstellschrauben 36 vorgesehen, die jeweils in einem Gewindeblock 35 gehalten werden. Jede der Einstellschrauben 36 stützt sich an einer Seitenwand des Trägersockels 18, 20 ab (vergleiche Figur 3). Durch Betätigung der Einstellschraube 36 kann die Platte relativ zu dem Befestigungssockel verstellt werden.

Im Bereich eines jeden Generatorfußes sind zwei Einstellschrauben 36 jeweils in einem an die Platte montierten Gewindeblock 35 vorgesehen, wobei die Einstellschrauben ein Ausrichten der Platte 28 relativ zu dem Befestigungssockel 20 erlauben.

Figur 6 zeigt eine Platte 28 mit vier Dämpfungselementen 26, die in den Ecken der rechteckigen Platte 28 angeordnet sind. Die Seiten der Platte 28 besitzen jeweils Ausnehmungen 38 und 40, die auf gegenüberliegenden Seiten die gleiche Form besitzen. Die an der schmaleren Seite vorgesehene Ausnehmung 38 ist tiefer ausgeschnitten als die auf der Längsseite vorgesehene Ausnehmung 40. Die Ausnehmungen 38 und 40 sind vorgesehen, um den Generator mit Hilfe eines Hydraulikzylinders oder dergleichen anzuheben. Um hierbei die anderen, der verwendeten Ausnehmung gegenüberliegenden Dämpfungselemente gleichmäßig zu belasten, ist der Hydraulikzylinder mittig zwischen den Dämpfungselementen anzusetzen.

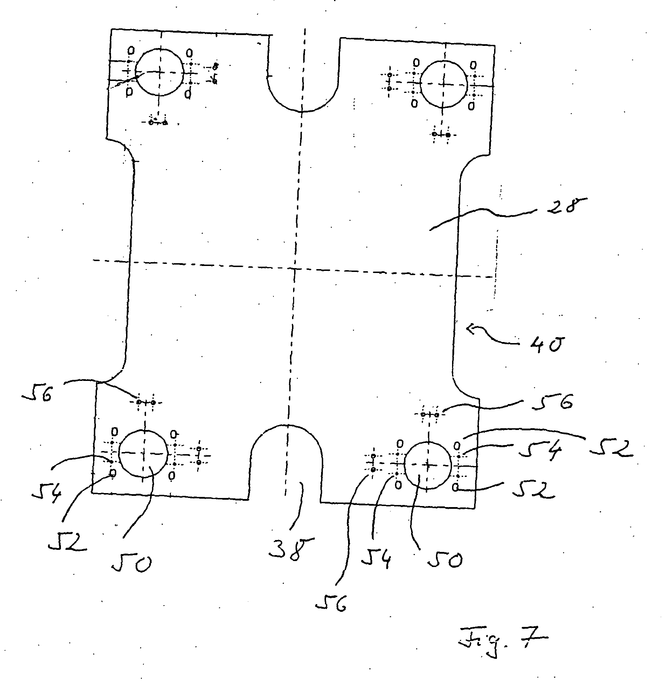

Figur 7 zeigt die Platte 28 in der Draufsicht. Die Platte 28 besitzt eine rechteckige Grundform mit den Ausnehmungen 38 und 40 jeweils mittig an den Seiten. In den Eckbereichen ist eine zentrale Bohrung 50 vorgesehen, die einen Zugriff von unten zu einem Dämpfungselement gestatten. Jeweils an den zu den benachbarten Bereichen weisenden Seiten der Bohrung 50 sind paarweise Bohrungen 56 vorgesehen. Jedes Paar erstreckt sich hierbei parallel zu einer Seite der Platte 28. Jedes Paar von Bohrungen 56 dient zur Befestigung eines Gewindeblocks 35, der eine Stellschraube 36 hält. Die Stellschraube ist im montierten Zustand auf die Mittelachse der Bohrung 50 ausgerichtet. Symmetrisch um die Bohrung 50 sind vier Langlöcher 52 vorgesehen und bilden ein Rechteck, dessen Seiten parallel zu den Seiten der Platte 28 ausgerichtet sind. Ferner erstrecken sich die Langlöcher in Richtung der längeren Seitenkante der Platte 28. Durch die Langlöcher 52 ist die Schraube 31 zur Befestigung der Platte an dem Befestigungssockel 20 vorgesehen. Um die Platte besser auf dem Sockel ausrichten zu können, ist die Bohrung in dem Befestigungssockel ebenfalls als Langloch ausgebildet, allerdings als ein quer zu dem Langloch 52 orientiertes Langloch. Die Platte 28 kann daher in jede beliebige Richtung verschoben werden. Die Schrauben 32 müssen daher nur gelöst und nicht demontiert werden. Durch die quer angeordneten Langlöcher können unter dem Schraubenkopf und der Mutter der Schraube Standardscheiben verwendet werden. An der Längsseite sind zwischen den Langlöchern 52 Bohrungen 54 vorgesehen, die zur Befestigung des Dämpfungselements 26 dienen, mit den Schrauben 32. Die Bohrungen 54 sind für jedes Dämpfungselement 26 entsprechend den Bohrungen in der Fußplatte 34 des Dämpfungselements vorgesehen.

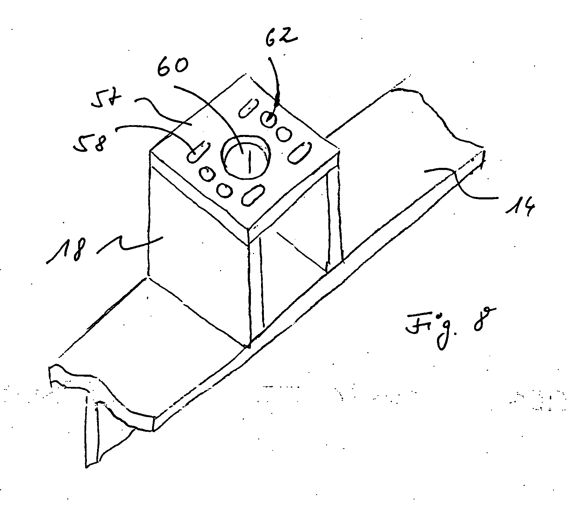

Figur 8 zeigt eine Detailansicht eines Trägersockels 18 auf dem Querträger 14. Der Trägersockel 18 besitzt eine Platte 57 mit einer zentralen kreisrunden Bohrung 60. Die Bohrung 60 ist von unten, der Seite des Querträgers 14 frei zugänglich. Um die zentrale Bohrung 60 sind vier Langlöcher 58 angeordnet, die parallel zueinander und parallel zur Längsachse des Querträgers 14 ausgerichtet sind. Zwischen den Längsseiten der Langlöcher 58 liegt jeweils ein Paar von Bohrungen 62. Die Langlöcher 58 dienen zur Aufnahme der Schraube 31 (vgl. Figur 4). Durch die Ausbildung als Langlöcher und die korrespondierenden Langlöcher 52 der Montageplatte ist deren Ausrichtung vor Befestigung mit den Schrauben 31 möglich. Die Bohrung 62 dient zur Aufnahme einer eventuell überstehenden Schraube 32.

## Patentansprüche

1. Vorrichtung zur Lagerung eines Generators (10) in einer Windenergieanlage, mit
- einer Platte (28), die mit Dämpfungselementen (26) für Generatorfüße (24) und Bohrungen (52) zur Aufnahme von Verbindungsmitteln (31) für eine Verbindung der Platte (28) mit einem Träger (18, 20) in der Windenergieanlage versehen ist, und
- jeweils zwei Einstelleinrichtungen (35) für jedes der Dämpfungselemente (26), die auf der vom Generator abgewandten Seite der Platte (28) angeordnet sind und ein Stellelement (36) zur Ausrichtung der Platte (28) auf dem Träger (18, 20) besitzen.

2. Vorrichtung nach Anspruch 1, **dadurch gekennzeichnet, daß** das erste Verbindungselement (29, 30) einen der Generatorfüße (24) mit einem der Dämpfungselemente (26) verbindet.

3. Vorrichtung nach einem der Ansprüche 1 oder 2, **dadurch gekennzeichnet, daß** das erste Verbindungselement einen Bolzen (30) und eine Mutter (29) aufweist.

4. Vorrichtung nach Anspruch 3, **dadurch gekennzeichnet, daß** der Bolzen (30) in dem Dämpfungselement (26) derart gelagert ist, daß im montierten Zustand des Dämpfungselements (26) bei gelöster Mutter (29) der Bolzen (30) entfernbar ist.

5. Vorrichtung nach einem der Ansprüche 1 bis 4, **dadurch gekennzeichnet, daß** das Dämpfungselement (26) über ein zweites Verbindungsmittel (32) mit der Platte verbunden ist.

6. Vorrichtung nach Anspruch 5, **dadurch gekennzeichnet, daß** das Dämpfungselement (26) an der Platte (28) vormontiert ist.

7. Vorrichtung nach einem der Ansprüche 1 bis 6, **dadurch gekennzeichnet, daß** je eine Einstelleinrichtung (35) von benachbarten Dämpfungselementen in entgegengesetzter Richtung an der Platte (28) angeordnet sind.

8. Vorrichtung nach einem der Ansprüche 1 bis 7, **dadurch gekennzeichnet, daß** die Bohrungen (52) in der Platte als Langlöcher ausgebildet sind, die quer zu Langlöchern (58) im Trägersockel (18, 20) angeordnet sind.

## Claims

1. Device for bearing a wind turbine generator (10), comprising
- a plate (28) which is provided with damping elements (26) for generator feet (24) and holes (52) for receiving connecting means (31) for connecting the plate (28) to a support (18, 20) in the wind turbine, and
- two respective adjusting devices (35) for each of the damping elements (26) which are arranged on the side of the plate (28) remote from the generator and have an adjusting element (36) for aligning the plate (28) on the support (18, 20).

2. Device according to Claim 1, **characterized in that** the first connecting element (29, 30) connects one of the generator feet (24) to one of the damping elements (26).

3. Device according to one of Claims 1 or 2, **characterized in that** the first connecting element has a bolt (30) and a nut (29).

4. Device according to Claim 3, **characterized in that** the bolt (30) is mounted in the damping element (26) such that in the mounted state of the damping element (26) when the nut (29) is released, the bolt (30) may be removed.

5. Device according to one of Claims 1 to 4, **characterized in that** the damping element (26) is connected via a second connecting means (32) to the plate.

6. Device according to Claim 5, **characterized in that** the damping element (26) is preassembled on the plate (28).

7. Device according to one of Claims 1 to 6, **characterized in that** one respective adjusting device (35) is arranged on adjacent damping elements in the opposing direction on the plate (28).

8. Device according to one of Claims 1 to 7, **characterized in that** the holes (52) are configured in the plate as slots, which are arranged transversely to slots (58) in the support base (18, 20).

## Revendications

1. Dispositif pour supporter un générateur (10) d'une éolienne, comprenant
- une plaque (28) pourvue d'éléments d'amortissement (26) pour des pieds de générateur (24) et de trous (52) pour recevoir des moyens d'assemblage (31) pour un assemblage de la plaque (28) avec un support (18, 20) dans l'éolienne, et
- respectivement deux organes d'ajustement (35) pour chaque élément d'amortissement (26) qui sont disposés sur l'autre côté de la plaque (28) par rapport au générateur et présentent un élément de réglage (36) pour aligner la plaque (28) sur le support (18, 20).

2. Dispositif selon la revendication 1, **caractérisé en ce que** le premier élément d'assemblage (29, 30) raccorde un des pieds de générateur (24) à un des éléments d'amortissement (26).

3. Dispositif selon l'une des revendications 1 ou 2, **caractérisé en ce que** le premier élément d'assemblage présente un boulon (30) et un écrou (29).

4. Dispositif selon la revendication 3, **caractérisé en ce que** le boulon (30) est logé dans l'élément d'amortissement (26) de telle sorte que le boulon (30) est démontable lorsque l'écrou (29) est desserré à l'état monté de l'élément d'amortissement (26).

5. Dispositif selon l'une des revendications 1 à 4, **caractérisé en ce que** l'élément d'amortissement (26) est raccordé à la plaque par un second moyen d'assemblage (32).

6. Dispositif selon la revendication 5, **caractérisé en ce que** l'élément d'amortissement (26) est prémonté sur la plaque (28).

7. Dispositif selon l'une des revendications 1 à 6, **caractérisé en ce que** respectivement un organe d'ajustement (35) d'éléments d'amortissement voisins est disposé dans une direction opposée à l'autre sur la plaque (28).

8. Dispositif selon l'une des revendications 1 à 7, **caractérisé en ce que** les trous (52) dans la plaque sont constitués en tant que trous oblongs qui sont disposés transversalement par rapport à des trous oblongs (58) dans le socle de support (18, 20).
